# EUROPÄISCHE PATENTSCHRIFT

(11) **EP 1 068 793 B1**
(45) Veröffentlichungstag und Bekanntmachung des Hinweises auf die Patenterteilung: **28.04.2004**
(21) Anmeldenummer: 00113324.8
(22) Anmeldetag: 23.06.2000
(51) Int. Cl.: A01F 12/44

(54) **Sieb eines Mähdreschers**
Combine sieve
Grille de moissonneuse-batteuse

(30) Priorität: 16.07.1999 US 356292
(43) Veröffentlichungstag der Anmeldung: 17.01.2001
(73) Patentinhaber: DEERE & COMPANY, Moline, Illinois 61265-8098 (US)
(72) Erfinder: Lauer, Fritz Karl, 66894 Krähenberg (DE)
(74) Vertreter: Holst, Sönke, Dr.

(56) Entgegenhaltungen:
- EP-A- 0 104 676
- EP-A- 0 682 860
- DE-U- 6 905 754
- DE-U- 9 112 209
- FR-A- 2 026 627
- US-A- 3 472 378
- DATABASE WPI Section PQ, Week 198943 Derwent Publications Ltd., London, GB; Class P12, AN 1989-315178 XP002148150 & SU 1 471 980 A (ROSTSELMASH PROD AS), 15. April 1989 (1989-04-15)

## Beschreibung

Die Erfindung betrifft ein Sieb und eine Siebverstellungseinrichtung eines landwirtschaftlichen Mähdreschers, mit einem Rahmenzusammenbau und darin abgestützten, sich quer zur Vorwärtsrichtung des Mähdreschers erstreckenden, verstellbaren Lamellen, wobei ein Einstellmechanismus mit einem zur Verstellung der Lamellen eingerichteten, durch eine Bedienereingabe ansteuerbaren Antrieb vorgesehen ist, der Rahmenzusammenbau im Betrieb eine Schwingbewegung ausführt und der Antrieb zur Verstellung der Lamellen an einem Abschnitt des Rahmenzusammenbaus befestigt ist und mitschwingt.

In einer Erntemaschine, wie einem Mähdrescher, ist in der Regel nach dem Dreschen und Trennen noch etwas Spreu und Stroh mit dem Korn vermischt. Die Reinigungseinheit entfernt diese Verunreinigungen aus dem Korn. Bei den meisten Mähdreschern enthält die Reinigungseinheit drei Hauptkomponenten: ein Gebläse, ein Obersieb und ein Untersieb. Das Gebläse weist ein eigenes Gehäuse auf, während das Obersieb und das Untersieb am Siebkasten angebracht sind.

Das Gebläse ist ein mehrflügeliges Gebläse, das vor dem Siebkasten angeordnet ist. Der vom Gebläse erzeugte Luftstrom entfernt den größten Teil der Spreu und des Strohs, indem er die Spreu und das Stroh zur Rückseite des Mähdreschers hinaus bläst. Der Luftstrom kann durch eine Einstellung der Gebläsegeschwindigkeit oder durch eine Änderung der Öffnung des Gebläses eingestellt werden. Das Korn fällt durch das Obersieb und Untersieb auf einen Schneckenförderer für sauberes Korn und wird zum Korntank abtransportiert.

Der Siebkasten, der das Obersieb und das Untersieb enthält, ist an der Trägerstruktur des Mähdreschers unterhalb der Trenneinrichtung angebracht. Die Unterseite des Siebkastens enthält den Schneckenförderer für Überkehr und den Schneckenförderer für sauberes Korn.

Das Obersieb und das Untersieb sind an Aufhängungen aufgehängt, die an den Seiten des Siebkastens angebracht sind. Es gibt drei Arten typischer Bewegungen des Siebkastens: Hin- und Herbewegen, Schütteln und Kaskadieren. Bei einem sich hin- und herbewegenden Siebkasten bewegen sich das Obersieb und das Untersieb in zueinander gegenläufigen Richtungen. Bei einem schüttelnden Siebkasten bewegen sich das Obersieb und das Untersieb in dieselbe Richtung. Bei einem kaskadierenden Siebkasten (engl. "cascading") sind das Obersieb und das Untersieb so angeordnet, dass das Material von einem Sieb in einer wasserfallartigen oder rollenden Bewegung auf das andere Sieb fällt.

Die Obersiebe sind entweder einstellbar oder nicht-einstellbar. Das einstellbare Obersieb ist aus einer Reihe sich quer erstreckender Lamellen mit Reihen von Zähnen aufgebaut. Jede dieser Lamellen ist an einer Kurbelwelle befestigt, die einen Kurbelarm aufweist, der sich im Eingriff mit einer sich axial erstreckenden Verstellstange befindet. Durch ein axiales Verschieben der Verstellstange werden alle Lamellen gleichzeitig bewegt.

Das einstellbare Obersieb und Untersieb werden abhängig von den Erntegutbedingungen eingestellt. Die Lamellen des Obersiebs werden so weit geöffnet oder geschlossen, dass das Korn durch das Obersieb fällt, bevor es sich über die Länge des Obersiebs bewegt. Wenn das Obersieb zu weit geöffnet wird, kann es das Untersieb mit Spreu überlasten. Wenn das Obersieb nicht weit genug geöffnet wird, wird überschüssiges Korn dem Schneckenförderer für Überkehr zugeführt und etwas davon an der Rückseite des Mähdreschers verloren gehen. Die Lamellen des Untersiebs müssen weit genug geöffnet werden, um den Körnern des Getreides zu ermöglichen, leicht durch sie hindurch zu fallen, aber nicht so weit, dass Stroh und Spreu hindurch fallen können.

Bei vielen Mähdreschern muss ein Bediener an der Rückseite des Mähdreschers zwischen die Seitenbleche greifen, um diese Einstellungen durchzuführen. Das macht die Einstellungen beschwerlich und zeitaufwändig. Verschiedene fernbedienbare Einstellmechanismen wurden vorgeschlagen. Die US 4 897 027 A offenbart einen Kabelantriebsmechanismus, der einem Bediener erlaubt, den Winkel der Lamellen vom Platz eines Bedieners aus einzustellen. Die US 5 586 033 A offenbart ein Gerät, das die Lamellen durch einen motorisch angetriebenen Kabelmechanismus zur selbsttätigen Steuerung antreibt. Der Motor ist am Rahmen des Mähdreschers befestigt.

Aus der DE 71 45 564 U ist es bekannt, in ein Sieb oder in einen Siebrahmen eine elektromotorische Vorrichtung zur Verstellung der Sieböffnungsweite einzubauen. Die Verstelleinrichtung wird durch einen Elektromotor und eine nachgeschaltete Spindelverstellung gebildet. Der Elektromotor ist mit seiner Motorwelle in der Bewegungsrichtung der Siebe ausgerichtet und bewegt eine mit den Lamellen des Siebs gekoppelte Verstellstange. Der Elektromotor wird je nach Verstellwunsch angetrieben. An der Verstellstange ist eine Messeinrichtung angebaut, mittels welcher die Sieböffnungsweite ermittelt und durch ein Anzeigegerät in der Fahrerkabine angezeigt wird. Der Maschinenbediener verstellt von der Fahrerkabine aus per Hand beziehungsweise mittels eines Schalters die Sieböffnungsweite so lange, bis von dem Anzeigegerät die gewünschte Öffnungsweite angezeigt wird.

Bei dieser Anordnung ist als nachteilig anzusehen, dass sämtliche rotierende Teile der Verstellvorrichtung, wie Motorwelle, Stirnrad, Gewinde, Verstellstange und Messeinrichtung mit ihrer Betätigungsrichtung bzw. ihrer Drehachse in Richtung der Bewegungsachse der Siebe angeordnet sind. Diese Anordnung wirkt sich nachteilig auf die Haltbarkeit der Siebverstellung und der Messeinrichtung aus, da die bei der Schwingbewegung in den einzelnen Bauteilen auftretenden Massenträgheitskräfte der einzelnen Elemente zu Verschleiß in den Lager- und Führungsstellen führen.

In der nach dem Prioritätstag des vorliegenden Schutzrechts veröffentlichten EP 1 068 792 A wird ebenfalls vorgeschlagen, den Verstellantrieb direkt am schwingenden Siebrahmen anzubringen. Durch eine Anordnung der Verstellrichtung quer zur Schwingrichtung des Siebes vermeidet man die Trägheitskräfte, die bei der Ausführungsform gemäß DE 71 45 564 A auftreten. Die Sieböffnungsweite wird in der EP 1 068 792 A vom Maschinenbediener vorgegeben.

Die EP 0 682 860 A offenbart eine Siebeinrichtung eines Mähdreschers, bei der die Lamellen durch eine sich quer zur Vorwärtsrichtung erstreckende Welle verstellt werden. An diese Welle wird ein Werkzeug angekoppelt, das von Hand betätigt wird.

Die der Erfindung zu Grunde liegende Aufgabe wird darin gesehen, eine Reinigungseinrichtung mit verstellbaren Lamellen zu schaffen, die einfach gestaltet ist und präzise arbeitet.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, den Antrieb an einem Abschnitt des Rahmenzusammenbaus des Siebes zu befestigen, der auch die Lamellen trägt. Auf diese Weise ist eine unerwünschte Relativbewegung zwischen Antrieb und dem die Lamellen halternden Rahmenzusammenbau nicht möglich. Der Antrieb bewegt die Lamellen über ein Verbindungselement, das sich quer zur Vorwärtsrichtung des Mähdreschers erstreckt, d. h. parallel zur Längsrichtung der Lamellen. Der Antrieb ist alternativ zu einer Bedienereingabe der Position der Lamellen durch ein automatisiertes Steuersystem einstellbar.

Die Siebe der Reinigungseinrichtung sind mit einer Vielzahl sich quer zur Fahrtrichtung des Mähdreschers erstreckender Lamellen versehen. In der Regel ist jede Lamelle mit einer Kurbelwelle ausgestattet, die einen Kurbelarm aufweist, um die Winkelstellung der Lamelle einzustellen. Die Kurbelarme sind in Schlitzen aufgenommen, die sich in einer axial (d. h. längs der Vorwärtsfahrtrichtung) erstreckenden Verstellstange befinden. Durch eine Bewegung der Verstellstange nach vorn bzw. hinten wird der Winkel der Lamellen und die sich zwischen ihnen ergebende Öffnung verändert. Es ist aber auch denkbar, die Verstellstange zu drehen und die Drehung durch geeignete Mechanismen in eine Verschiebebewegung der Lamellen umzusetzen.

Vorzugsweise ist der Antrieb außerhalb der Seitenbleche einer tragenden Struktur (Rahmen oder Chassis) des Mähdreschers angeordnet, während sich die Lamellen und der Hauptteil des Rahmenzusammenbaus des Siebes zwischen den Seitenblechen befinden. Der Rahmenzusammenbau kann mit einer über das Seitenblech vorspringenden, ihn durchdringenden Befestigungsklammer zur Befestigung des Antriebs ausgestattet sein.

Weiterhin bietet es sich an, die Drehstellung des Antriebs und somit den Winkel der Lamellen mittels eines Sensors, beispielsweise eines Halleffektsensors zu erfassen. Der vom Sensor bereitgestellte Messwert kann zur Anzeige der Sieböffnung dienen, oder als Rückkopplungswert einer selbsttätig arbeitenden Steuerung zugeführt werden.

Als Antrieb kommt ein Elektro- oder Hydraulikmotor in Frage. Der Motor kann manuell vom Bediener des Mähdreschers betätigt werden oder durch ein automatisiertes Steuersystem.

Die vorliegende Erfindung bezieht sich auf ein Sieb einer Reinigungseinrichtung, also ein Obersieb und/oder ein Untersieb, welche jeweils mit einem erfindungsgemäßen - in der Regel separaten - Antrieb ausgestattet werden können.

Zur Antriebsverbindung zwischen Antrieb und Verstellstange kann eine quer zur Fahrtrichtung des Mähdreschers angeordnete, drehbare Welle dienen. Zwischen der Welle und der Verstellstange kann ein Getriebe mit zwei Kegelzahnrädern eingesetzt werden. Die Drehbewegung des der Leiste zugewandten Kegelzahlrads wird vorzugsweise mittels eines Gewindes in eine Verschiebebewegung umgewandelt. Insbesondere kann die Verstellstange mit einem Element mit einem Innengewinde ausgestattet sein, das in den mit Außengewinde versehenen Abschnitt einer axial angeordneten, drehbaren Welle eingreift. Die axial angeordnete, drehbare Welle ist mit einem axialen Kegelzahnrad versehen, das mit einem dazu senkrechten, quer angeordneten Kegelzahnrad zusammenwirkt, das an einer sich quer erstreckenden drehbaren Welle befestigt ist. Das vom quer angeordneten Kegelzahnrad abgelegene Ende der Welle ist mit der Ausgangswelle eines elektrischen Motors gekoppelt. In einer anderen Ausführungsform der Erfindung ist eine nicht-drehbare Welle mit einem mit Außengewinde versehenen Abschnitt an der Verstellstange befestigt. Der mit Außengewinde versehene Abschnitt der nicht-drehbaren Welle greift in einen mit Innengewinde versehenen Abschnitt des axialen, in Fahrtrichtung orientierten Kegelzahnrads ein, um die Verstellstange im Mähdrescher nach vorn und hinten zu verschieben.

In den Zeichnungen ist ein nachfolgend näher beschriebenes Ausführungsbeispiel der Erfindung dargestellt. Es zeigt:
- Fig. 1: eine Seitenansicht eines landwirtschaftlichen Mähdreschers, in der die Dresch-, Trenn- und Reinigungszusammenbauten gezeigt sind,
- Fig. 2: einen seitlichen Querschnitt durch den Einstellmechanismus,
- Fig. 3: eine Ansicht des Einstellmechanismus von unten,
- Fig. 4: eine Draufsicht auf den Einstellmechanismus.

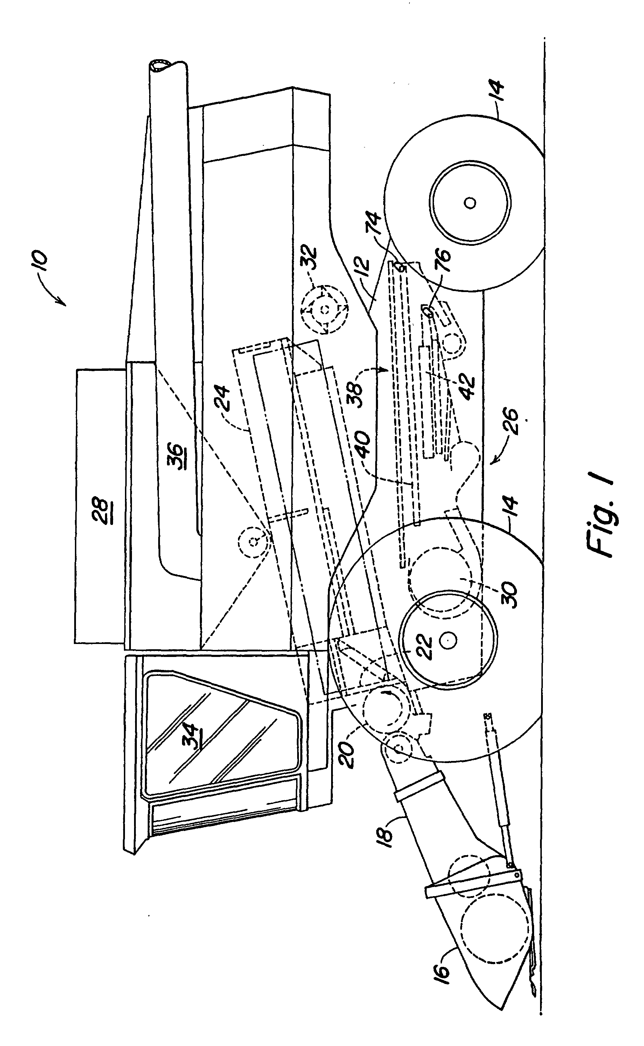

Voranzustellen ist, dass in der vorliegenden Offenbarung unter axialer Richtung die Vorwärtsfahrtrichtung des Mähdreschers verstanden wird. Figur 1 ist die Seitenansicht eines selbstfahrenden landwirtschaftlichen Mähdreschers- 10. Der Mähdrescher 10 umfasst eine tragende Struktur 12 mit Rädern 14. Die tragende Struktur 12 umfasst zwei sich axial erstreckende Seitenbleche, zwischen denen die verschiedenen Verarbeitungszusammenbauten für das Erntegut angeordnet sind.

Vom Mähdrescher 10 erstreckt sich ein Schneidwerk 16 nach vorn, das geerntetes Gut einem Schrägförderer 18 zuführt. Der Schrägförderer 18 enthält einen Förderer, um das geerntete Gut den Dresch-, Trenn- und Reinigungszusammenbauten zuzuführen, die innerhalb der Seitenbleche des Mähdreschers 10 angeordnet sind. Obwohl die vorliegende Erfindung als an einem Axialflussmähdrescher angebracht offenbart wird, kann sie auch an konventionellen und anderen Mähdrescherkonfigurationen mit einer Reinigungseinrichtung verwendet werden.

Bei dem dargestellten Mähdrescher führt der Schrägförderer 18 das geerntete Gut einer sich quer erstreckenden Leittrommel 20 zu, die das Gut durch einen Einlassübergangsbereich 22 einem axialen Dresch- und Trennzusammenbau 24 zuführt. Korn und Spreu werden vom axialen Dresch- und Trennzusammenbau 24 einem Reinigungszusammenbau 26 zugeführt. Der Reinigungszusammenbau 26 führt das saubere Korn wiederum einem Korntank 28 zu und die Spreu wird durch das Reinigungsgebläse 30 an der Rückseite des Mähdreschers hinaus geblasen. Erntegut, das weder Korn noch Spreu ist, wird von der axialen Dresch- und Trennzusammenbau 24 einer quer angeordneten Leittrommel 32 zugeführt, die das Material an der Rückseite des Mähdreschers 10 hinaus befördert. Zeitweise im Korntank 28 gespeichertes Erntegut kann durch Betätigung einer Entladeförderschnecke 36 durch einen Bediener in der Bedienerkabine 34 entladen werden. Der Dresch- und Trennzusammenbau und die Reinigungseinrichtung sind zwischen den Seitenblechen der tragenden Struktur 12 angeordnet.

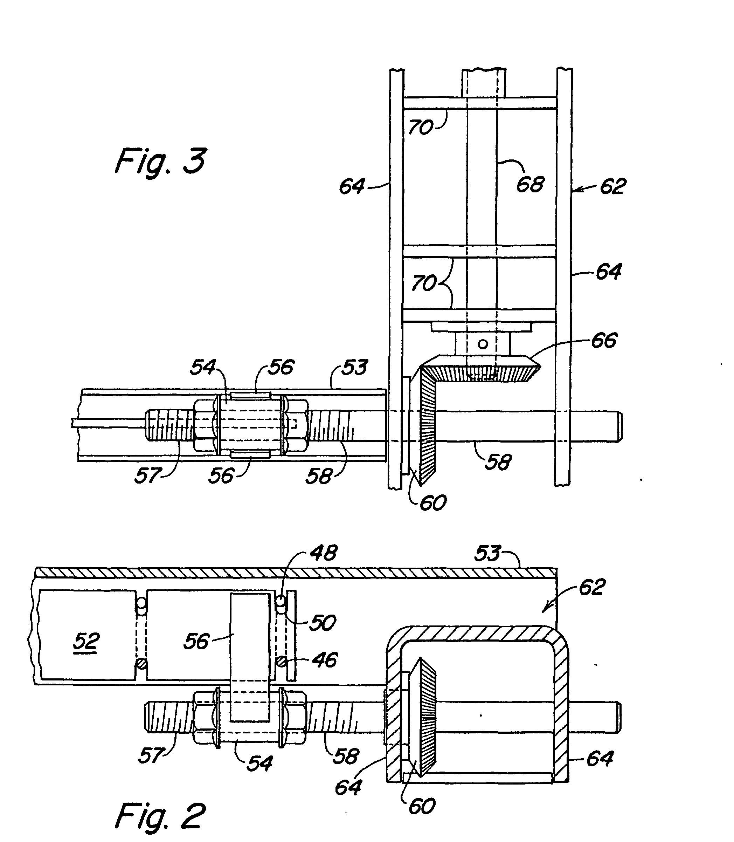

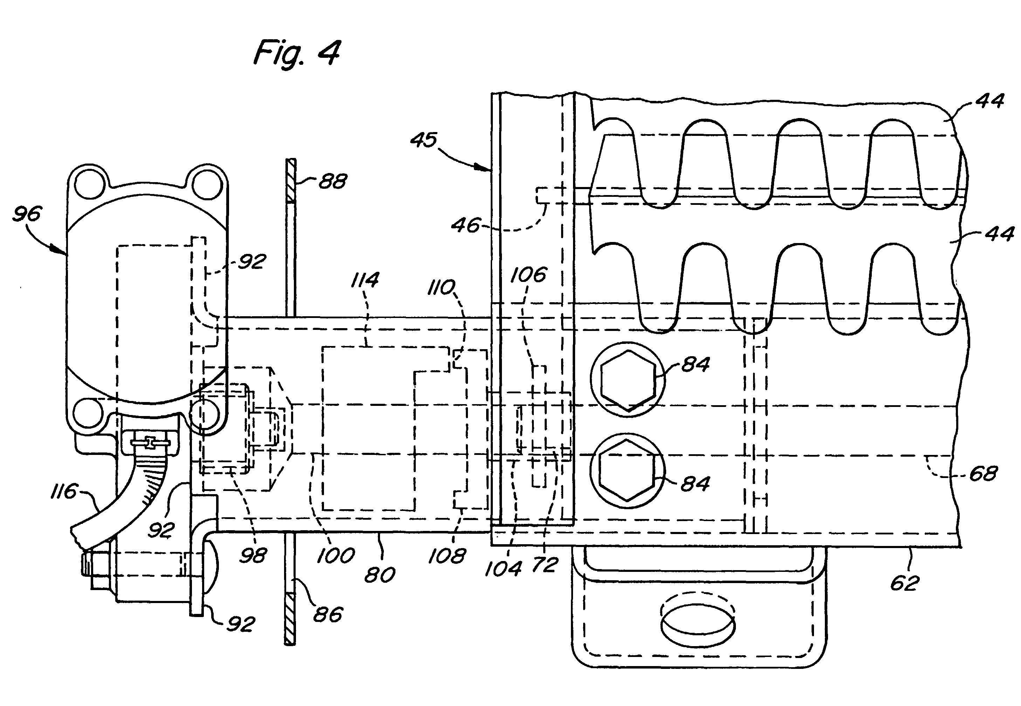

Die vorliegende Erfindung bezieht sich auf einen Mechanismus zum Einstellen der Lamellen im Siebkasten 38. Der Siebkasten 38 ist mit einem Obersieb 40 und einem Untersieb 42 ausgestattet. Das Obersieb 40 und das Untersieb 42 sind mit quer verlaufenden, einstellbaren Lamellen 44 versehen, die in Figur 4 gezeigt und in einem rechtwinkligen Rahmenzusammenbau 45 befestigt sind, der von den Seitenwänden des Siebkastens 38 getragen wird. Es wird auf Figur 2 verwiesen, gemäß der jede der Lamellen 44 mit einer Kurbelwelle 46 ausgestattet ist, die einen Kurbelarm 48 aufweist. Der Kurbelarm 48 ist in einem Schlitz 50 einer axialen Verstellstange 52 angeordnet. Durch eine axiale Bewegung der Verstellstange 52 kann die Winkelstellung aller Lamellen 44 des Obersiebs 40 oder aller Lamellen 44 des Untersiebs 42 eingestellt werden. Die Verstellstange 52 ist in einem sich axial erstreckenden Gehäuse 53 in der Form eines umgedrehten U aufgenommen.

Die Verstellstange 52 ist durch einen Streifen 56 an einem Element 54 mit einem Innengewinde angebracht. Das Element 54 mit Innengewinde ist an einem mit Gewinde versehenen Abschnitt 57 der axial angeordneten, drehbaren Welle 58 befestigt. Die drehbare Welle 58 ist mit einem axialen Kegelzahnrad 60 versehen. Das axiale Kegelzahnrad 60 ist in einem Kanal 62 mit der Form eines umgedrehten U angeordnet. Der Kanal 62 bildet die Endwand des Rahmenzusammenbaus 45 des Obersiebs 40 oder Untersiebs 42. Die drehbare Welle 58 erstreckt sich durch beide Wände 64 des Kanals 62, um zu verhindern, dass sich die Welle 58 verbiegt.

Das orthogonal angeordnete Kegelzahnrad 66 befindet sich mit dem axialen Kegelzahnrad 60 im Eingriff und ist an einer quer angeordneten drehbaren Welle 68 befestigt. Eine Reihe an Stegelementen 70 erstreckt sich quer zum Kanal 62, um zu verhindern, dass sich die drehbare Welle 68 darin verbiegt. Die drehbare Welle 68 erstreckt sich quer und näherungsweise bis zur Hälfte über das Innere der von den Seitenblechen definierten tragenden Struktur 12. Die drehbare Welle 68 endet an einem Ende 72, das nahe der Seite des Rahmenzusammenbaus 45 des Obersiebs 40 oder des Untersiebs 42 liegt.

Eine U-förmige Befestigungsklammer 80 ist durch ein Paar Befestigungselemente, wie Zusammenbauten 84 mit Schrauben und Muttern, am Kanal 62 befestigt. Die Befestigungsklammer 80 ragt quer über den Kanal 62 hinaus und durch eine Öffnung 86 im Seitenblech 88 des Mähdreschers 10. Das äußere Ende der Klammer 80 ist nach außen erweitert und bildet Flansche 92, an denen ein Zusammenbau 96 mit einem Elektromotor und einem Getriebe befestigt ist. Der Zusammenbau 96 mit Elektromotor und Getriebe hat eine mit Keilnuten versehene oder verzahnte Ausgangswelle 98. Ein Ende einer Verbindungswelle 100 ist mit der Ausgangswelle 98 gekoppelt. Das gegenüber liegende Ende 104 der Verbindungswelle 100 ist mit dem Ende 72 der drehbaren Welle 68 gekoppelt. Ein Stift 106 koppelt die zwei Wellen 68, 100 aneinander.

Das Ende der Welle 104 umfasst ein Verbindungszahnrad 108 mit einer Vielzahl in axialer Richtung weisender Zähne 110. Die Zähne 110 sind einem Sensor 114 zugewandt, beispielsweise einem Halleffektsensor, der in der Klammer 80 befestigt ist und die Drehung der Verbindungswelle 100 und der damit verbundenen, quer angeordneten drehbaren Welle 68 erfasst. Fachleute werden erkennen, dass auch andere Sensortypen verwendbar sind, einschließlich mechanischer, elektrischer oder optischer Sensoren.

Der Zusammenbau 96 mit Elektromotor und Getriebe ist durch ein Kabel 116 mit einem Steuersystem verbunden. Das Steuersystem kann einen manuell betätigten Schalter in der Bedienerkabine 34 des Mähdreschers 10 aufweisen, um den Motor zwecks Einstellung der Position der Lamellen 44 zu betreiben. Alternativ kann das Steuersystem ein Teil eines automatisierten Steuersystems sein, das die Position der Lamellen 44 auf der Basis verschiedener Eingangssignale des Steuersystems einstellt. Der Halleffektsensor stellt dem automatischen Steuersystem und/oder einer Anzeige in der Bedienerkabine 34 ein Ausgangssignal bereit, das eine Information bezüglich der Öffnung der Lamellen enthält. Die Öffnung der Lamellen 44 ist direkt proportional zur Drehstellung der drehbaren Welle 68 und der Verbindungswelle 100 und kann daher durch ein Zählen der Drehungen der Welle 100 gemessen werden.

Die vorliegende Erfindung bezieht sich auf die Befestigung des Antriebs direkt am Rahmenzusammenbau des Ober- oder Untersiebs.

Die anderen Elemente des Einstellmechanismus können von den gezeigten abweichen. So kann statt der Kegelzahnräder 60, 66 eine Schnecke mit einem Zahnrad zusammenwirken, und statt des Gewindes der drehbaren Welle 58 kann eine Zahnstange die Verschiebung der Verstellstange 52 bewirken.

## Patentansprüche

1. Sieb und Siebverstellungseinrichtung eines landwirtschaftlichen Mähdreschers (10), mit einem Rahmenzusammenbau (45) und darin abgestützten, sich quer zur Vorwärtsrichtung des Mähdreschers (10) erstreckenden, verstellbaren Lamellen (44), wobei ein Einstellmechanismus mit einem zur Verstellung der Lamellen (44) eingerichteten, durch eine Bedienereingabe ansteuerbaren Antrieb vorgesehen ist, der Rahmenzusammenbau (45) im Betrieb eine Schwingbewegung ausführt und der Antrieb zur Verstellung der Lamellen (44) an einem Abschnitt des Rahmenzusammenbaus (45) befestigt ist und mitschwingt, **dadurch gekennzeichnet, dass** der Antrieb durch ein Verbindungselement, das sich quer zur Vorwärtsrichtung des Mähdreschers (10) erstreckt und gegen eine Bewegung in der Vorwärtsrichtung des Mähdreschers (10) abgestützt ist, antriebsmäßig mit den Lamellen (44) verbunden ist, und dass der Antrieb alternativ zu einer Bedienereingabe der Position der Lamellen (44) durch ein automatisiertes Steuersystem einstellbar ist.

2. Sieb und Siebverstellungseinrichtung nach Anspruch 1, **dadurch gekennzeichnet, dass** die Lamellen (44) mit einer verstellbaren Verstellstange (52) verbunden sind, die sich parallel zur Längsachse des Mähdreschers (10) erstreckt, wobei der Antrieb eingerichtet ist, die Verstellstange (52) zu verstellen, insbesondere zu verschieben.

3. Sieb und Siebverstellungseinrichtung nach Anspruch 1 oder 2, **dadurch gekennzeichnet, dass** die Lamellen (44) zwischen Seitenblechen einer tragenden Struktur (12) des Mähdreschers (10) angeordnet sind, und dass der Antrieb außerhalb der Seitenbleche angeordnet ist.

4. Sieb und Siebverstellungseinrichtung nach Anspruch 3, **dadurch gekennzeichnet, dass** der Rahmenzusammenbau (45) eine Befestigungsklammer (80) umfasst, die seitlich über ein Seitenblech des Mähdreschers (10) vorspringt, und an der der Antrieb befestigt ist.

5. Sieb und Siebverstellungseinrichtung nach einem der Ansprüche 1 bis 4, **gekennzeichnet durch** einen Sensor (114) zur Feststellung der Drehstellung der Ausgangswelle (98) des Antriebs, insbesondere einen Halleffektsensor.

6. Sieb und Siebverstellungseinrichtung nach einem der vorhergehenden Ansprüche, **dadurch gekennzeichnet, dass** der Antrieb ein Elektro- oder Hydraulik-Motor ist.

7. Sieb und Siebverstellungseinrichtung nach einem der vorhergehenden Ansprüche, **dadurch gekennzeichnet, dass** es ein Obersieb (40) und/oder ein Untersieb (42) ist.

8. Sieb und Siebverstellungseinrichtung nach einem der Ansprüche 2 bis 7, **gekennzeichnet durch** eine quer angeordnete, drehbare Welle (68), die den Antrieb mit der Verstellstange (52) verbindet.

9. Sieb und Siebverstellungseinrichtung nach Anspruch 8, **gekennzeichnet durch** ein Kegelzahnradgetriebe, das die quer angeordnete Welle (68) mit der Verstellstange (52) verbindet.

10. Reinigungseinrichtung eines Mähdrescher (10) mit einem Sieb und einer Siebverstellungseinrichtung nach einem der vorhergehenden Ansprüche.

## Claims

1. Sieve and sieve displacement device of an agricultural combine harvester (10), having a frame assembly (45) and displaceable lamellae (44) which are supported therein and extend transversely relative to the forward direction of the combine harvester (10), an adjustment mechanism being provided with a drive which is equipped for displacement of the lamellae (44) and can be actuated by means of an operator input, the frame assembly (45) implementing a vibrating motion in operation and the drive for displacement of the lamellae (44) being mounted on a portion of the frame assembly (45) and vibrating with it, **characterised in that** the drive is connected drive-wise to the lamellae (44) by means of a connection element which extends transversely relative to the forward direction of the combine harvester (10) and is supported against a movement in the forward direction of the combine harvester (10), and **in that** the drive, alternatively to an operator input of the position of the lamellae (44), can be adjusted by means of an automated control system.

2. Sieve and sieve displacement device according to claim 1, **characterised in that** the lamellae (44) are connected to a displaceable displacement rod (52) which extends parallel to the longitudinal axis of the combine harvester (10), the drive being equipped for displacement of the displacement rod (52), in particular for translation.

3. Sieve and sieve displacement device according to claim 1 or 2, **characterised in that** the lamellae (44) are disposed between side sheets of a bearing structure (12) of the combine harvester (10), and **in that** the drive is disposed outwith the side sheets.

4. Sieve and sieve displacement device according to claim 3,
**characterised in that** the frame assembly (45) includes a mounting clamp (80) which projects laterally beyond one side sheet of the combine harvester (10) and on which the drive is mounted.

5. Sieve and sieve displacement device according to one of the claims 1 to 4, **characterised by** a sensor (114) for determining the rotational position of the output shaft (98) of the drive, in particular a Hall-effect sensor.

6. Sieve and sieve displacement device according to one of the preceding claims, **characterised in that** the drive is an electro- or hydraulic motor.

7. Sieve and sieve displacement device according to one of the preceding claims, **characterised in that** it is an upper sieve (40) and/or a lower sieve (42).

8. Sieve and sieve displacement device according to one of claims 2 to 7, **characterised by** a transversely disposed, rotatable shaft (68) which connects the drive to the displacement rod (52).

9. Sieve and sieve displacement device according to claim 8, **characterised by** a conical toothed wheel transmission which connects the transversely disposed shaft (68) to the displacement rod (52).

10. Cleaning device of a combine harvester (10) having a sieve and a sieve displacement device according to one of the preceding claims.

## Revendications

1. Grille et dispositif de réglage de grille d'une moissonneuse-batteuse agricole (10) comportant un ensemble de châssis (45) et des lamelles réglables (44), qui prennent appui dans l'ensemble de châssis et s'étendent transversalement par rapport à la direction d'avance de la moissonneuse-batteuse (10), et dans lequel il est prévu un mécanisme de réglage comportant un dispositif d'entraînement qui est agencé de manière à régler les lamelles (44) et peut être commandé par l'intermédiaire d'une entrée de l'opérateur, l'ensemble de châssis (45) exécute, en fonctionnement, un déplacement oscillant et le dispositif d'entraînement servant à régler les lamelles (44) est fixé à une partie de l'ensemble de châssis (45) et oscille conjointement avec cette partie, **caractérisés en ce que** le dispositif d'entraînement est relié selon une liaison motrice aux lamelles (44) par l'intermédiaire d'un élément de liaison qui s'étend transversalement par rapport à la direction d'avance de la moissonneuse-batteuse (10) et est supporté à l'encontre d'un déplacement dans la direction d'avance de la moissonneuse-batteuse (10), et que, en tant qu'alternative à une entrée, par l'opérateur, de la position des lamelles (44), le dispositif d'entraînement est réglable au moyen d'un système de commande automatisé.

2. Grille et dispositif de réglage de grille selon la revendication 1, **caractérisés en ce que** les lamelles (44) sont reliées à une barre de réglage réglable (52), qui s'étend parallèlement à l'axe longitudinal de la moissonneuse-batteuse (10), le dispositif d'entraînement étant agencé de manière à régler, notamment à déplacer, la barre de réglage (52).

3. Grille et dispositif de réglage de grille selon la revendication 1 ou 2, **caractérisés en ce que** les lamelles (44) sont disposées entre des tôles latérales d'une structure porteuse (12) de la moissonneuse-batteuse (10) et que le dispositif d'entraînement est disposé à l'extérieur des tôles latérales.

4. Grille et dispositif de réglage de grille selon la revendication 3, **caractérisés en ce que** l'ensemble de châssis (45) comprend une pince de fixation (80), qui fait saillie latéralement au-delà d'une tôle latérale de la moissonneuse-batteuse (10) et à laquelle est fixé le dispositif d'entraînement.

5. Grille et dispositif de réglage de grille selon l'une des revendications 1 à 4, **caractérisés par** un capteur (114) servant à fixer la position en rotation de l'arbre de sortie (98) du dispositif d'entraînement, notamment d'un capteur à effet Hall.

6. Grille et dispositif de réglage de grille selon l'une des revendications précédentes, **caractérisés en ce que** le dispositif d'entraînement est un moteur électrique ou un moteur hydraulique.

7. Grille et dispositif de réglage de grille selon l'une des revendications précédentes, **caractérisés en ce que** la grille est une grille supérieure (44) et/ou une grille inférieure (42).

8. Grille et dispositif de réglage de grille selon l'une des revendications 2 à 7, **caractérisés par** un arbre rotatif (68) qui est disposé transversalement et relie le dispositif d'entraînement à la barre de réglage (52).

9. Grille et dispositif de réglage de grille selon la revendication 8, **caractérisés par** un mécanisme à pignons coniques, qui relie l'arbre disposé transversalement (68) à la barre de réglage (52).

10. Dispositif de nettoyage d'une moissonneuse-batteuse (10) comportant une grille et un dispositif de réglage de grille selon l'une des revendications précédentes.
